# EUROPÄISCHE PATENTANMELDUNG

(11) **EP 3 435 048 A1**
(43) Veröffentlichungstag der Anmeldung: **30.01.2019**
(21) Anmeldenummer: 17182978.1
(22) Anmeldetag: 25.07.2017
(51) Int. Cl.: G01K 1/14

(54) **SENSOR ZUR ERFASSUNG EINES RÄUMLICHEN TEMPERATURPROFILS UND VERFAHREN ZUR HERSTELLUNG EINER SENSOREINHEIT**

(71) Anmelder: Heraeus Sensor Technology GmbH, 63801 Kleinostheim (DE)
(72) Erfinder: Wienand, Karlheinz, 63741 Aschaffenburg (DE); Dietmann, Stefan, 63755 Alzenau (DE); Boldt, Kai-Ulrich, 63450 Hanau (DE); Bleifuß, Martin, 63796 Kahl (DE); Hellmann, Uwe, 63579 Freigericht (DE); Teusch, Dieter, 63486 Bruchköbel (DE)
(74) Vertreter: Heraeus IP

(57) **Zusammenfassung**

Eine Sensoreinheit zur Erfassung eines räumlichen Temperaturprofils, aufweisend: zumindest ein Substrat (3, 3') mit einer ersten Oberfläche und einer der ersten Oberfläche zumindest bereichsweise gegenüberliegenden zweiten Oberfläche, wobei das Substrat (3, 3') zumindest bereichsweise flexibel ausgebildet ist; zumindest ein Adhäsionsmittel, wobei das Adhäsionsmittel zumindest bereichsweise auf der ersten Oberfläche und/oder auf der zweiten Oberfläche angeordnet ist, zum Anbringen der Sensoreinheit an zumindest einem Messkörper (15'''); und zumindest ein Sensorfeld, wobei das Sensorfeld auf der zweiten Oberfläche des Substrats (3, 3') angeordnet ist. Auch betrifft die vorliegende Erfindung ein Verfahren zur Herstellung einer Sensoreinheit.

## Beschreibung

Die vorliegende Erfindung betrifft eine Sensoreinheit zur Erfassung eines räumlichen Temperaturprofils. Weiterhin betrifft die vorliegende Erfindung ein Verfahren zur Herstellung einer Sensoreinheit.

Im Stand der Technik werden gattungsgemäße Sensoreinheiten zur Temperaturmessung an einzelnen galvanischen Zellen, oder an galvanischen Zellen eines Zellenstapels, wie beispielsweise an Brennstoffzellen, oder an Zellen eines Energiespeichers, beispielsweise einer Batterie, zur Überwachung einer Zellentemperatur verwendet. Schnelle Temperatursteigungen können die chemischen Prozesse in einer Zelle dahingehend beeinflussen, dass zunächst der Wirkungsgrad der Zelle abnimmt. Bei einer länger andauernden Überhitzung der Zelle können Beschädigungen an der Zelle auftreten, die zu einer vollständigen Zerstörung der Zelle führen können. Abhängig von der jeweiligen Anwendung der Zellen in einem Zellenstapel können mehrere Sensorelemente an einer Zelle und/oder an mehreren Zellen des Zellenstapels zur Temperaturüberwachung angeordnet werden.

Hierfür beschreibt beispielsweise die US 2013/0230755 A1 eine flexible Leitung, die zwischen den Zellen eines Zellenstapels angeordnet werden kann und an deren Ende ein Temperatursensor angeschlossen werden kann.

Eine weitere Temperatursensoreinheit zur Erfassung einer Zellentemperatur wird in der US 2013/0004811 A1 beschrieben. Die Temperatursensoreinheit umfasst ein flexibles Substrat mit einem darauf angeordneten Widerstandsthermometer mit Anschlüssen, die an dem Gehäuse einer Batteriezelle angeschlossen werden können.

Allerdings haben die aus dem Stand der Technik bekannten Temperatursensoreinheiten einen sehr komplexen und platzintensiven Aufbau. Auch ermöglichen die bekannten Temperatursensoreinheiten zumeist nur das Erfassen eines Temperaturwertes an einer Position einer Zelle / eines Zellenstapels. Weiterhin können die bekannten Temperatursensoreinheiten oft nur schwierig an der/dem Zelle/Zellenstapel angeordnet werden.

Aufgabe der vorliegenden Erfindung ist es daher, eine verbesserte Temperatursensoreinheit und ein Verfahren zur Herstellung einer verbesserten Temperatursensoreinheit bereitzustellen.

Diese Aufgabe wird erfindungsgemäß durch eine Temperatursensoreinheit gemäß des Gegenstands des Patentanspruchs 1 gelöst.

Die erfindungsgemäße Sensoreinheit zur Erfassung eines räumlichen Temperaturprofils, weist hierfür auf:
zumindest ein Substrat mit einer ersten Oberfläche und einer der ersten Oberfläche zumindest bereichsweise gegenüberliegenden zweiten Oberfläche, wobei das Substrat zumindest bereichsweise flexibel ausgebildet ist;
zumindest ein Adhäsionsmittel, wobei das Adhäsionsmittel zumindest bereichsweise auf der ersten Oberfläche und/oder auf der zweiten Oberfläche angeordnet ist, zum Anbringen der Sensoreinheit an zumindest einem Messkörper; und
zumindest ein Sensorfeld, wobei das Sensorfeld auf der zweiten Oberfläche des Substrats angeordnet ist.

Der Begriff "räumliches Temperaturprofil" kann in diesem Zusammenhang dafür verwendet werden, um eine Erfassung von mindestens zwei Temperaturwerten an mindestens zwei Positionen entlang eines oder mehrerer Messkörper zu bezeichnen. Die Erfassung der Temperaturwerte kann gleichzeitig oder nacheinander erfolgen. Der Begriff "unterschiedliche Positionen" kann austauschbar verwendet werden mit Begriffen wie beispielsweise "unterschiedlichen Bereichen" oder "unterschiedlichen Stellen".

Als ein Substrat, das zumindest bereichsweise flexibel ausgebildet ist kann ein Substrat verstanden werden, das unter Krafteinwirkung zumindest in bestimmten Bereichen im Wesentlichen zerstörungsfrei seine Form verändern kann. Je nach Ausführungsform kann bei Wegfall der einwirkenden Kraft das Substrat in die Ursprungsform zurückkehren, oder in der verbrachten Form bleiben. Auch können, je nach verwendeter Ausführungsform, alle Bereiche des Substrats flexibel ausgebildet sein, oder nur bestimmte Bereiche, um dadurch an die Geometrie des Messkörpers angepasst zu werden.

Im Allgemeinen kann die erfindungsgemäße Sensoreinheit zur Temperaturmessung an einer Vielzahl von unterschiedlichen Messkörpern angeordnet werden. Der Messkörper kann, je nach Anwendung, eine Batteriezelle, eine Brennstoffzelle, oder auch ein anderer sich erhitzender Körper, wie beispielsweise ein Motor, ein Heizelement in einem Sensor, oder eine Heizeinrichtung, wie beispielsweise eine Heizeinrichtung in einer Elektrischen Zigarette oder eines Aerosol-Verdampfers sein.

Zum vereinfachten Anbringen der Sensoreinheit an zumindest einem Messkörper ist erfindungsgemäß ein Adhäsionsmittel zumindest bereichsweise auf der ersten Oberfläche und/oder auf der zweiten Oberfläche des Substrats angeordnet.

Als Adhäsionsmittel kann jedes Mittel verstanden werden, das einen mechanischen Zusammenhalt von Substrat und Messkörper bewirkt. Beispielsweise kann als Adhäsionsmittel ein Klebefilm verwendet werden. Alternativ oder zusätzlich kann auch ein Klebstoff verwendet werden, der zunächst im flüssigen Zustand auf die erste und/oder zweite Oberfläche des Substrats aufgetragen wird und dann mit dem Messkörper verbunden wird.

Zur Messung des Temperaturprofils weist die Sensoreinheit ein Sensorfeld auf, das auf der zweiten Oberfläche des Substrats angeordnet ist. Das Sensorfeld kann Sensorelemente, elektrische Leitungen und optional Isolationsschichten umfassen. Die Sensorelemente können voneinander unabhängig an unterschiedlichen Positionen an dem Messkörper angeordnet werden. Alternativ oder zusätzlich kann das Sensorfeld auch ein Sensorelement mit einer zusammenhängenden Struktur umfassen, die angepasst ist mindestens zwei Temperaturwerte an mindestens zwei Positionen entlang eines oder mehrerer Messkörper zu ermitteln.

Die Sensoreinheit kann zusätzlich ein zweites Sensorfeld aufweisen, das Sensorelemente, elektrische Leitungen und optional Isolationsschichten umfassen kann und das auf der ersten Oberfläche des Substrats angeordnet ist.

Weiter vorteilhaft bringt der Einsatz einer erfindungsgemäßen Sensoreinheit einen Kostenvorteil gegenüber dem Einsatz von Einzelsensoreinheiten mit sich, da Einzelsensoreinheiten individuell positioniert und kontaktiert werden müssen.

Mit der Erfindung ist es erstmalig gelungen eine einfach und platzsparend zu integrierenden Sensoreinheit bereitzustellen, die es ermöglicht Temperaturwerte an verschiedenen Positionen an einem komplexen Messkörper parallel zu erfassen.

In einem Beispiel umfasst das Sensorfeld zumindest zwei Sensorelemente, die jeweils angepasst sind zum Erfassen einer Temperatur, und die an unterschiedlichen Positionen auf der zweiten Oberfläche des Substrats angeordnet sind.

Die beiden Sensorelemente können zumindest teilweise miteinander verbunden sein, beispielsweise können die Sensorelemente eine gemeinsame Masse aufweisen. Alternativ können die Sensorelemente auch voneinander unabhängig kontaktiert werden. Auch kann das Sensorfeld, abhängig von dem geplanten Einsatzgebiet, mehr als nur zwei Sensorelemente aufweisen.

Vorteilhaft können durch die Verwendung von mehreren Sensorelementen in einem Sensorfeld, Temperaturwerte an unterschiedlichen Positionen eines Messkörpers erfasst werden.

In einem Beispiel ist zumindest ein Sensorelement auf der zweiten Oberfläche mittels zumindest einer Leiterbahn auf der zweiten Oberfläche elektrisch kontaktiert, und/oder zumindest ein Sensorelement auf der zweiten Oberfläche ist mittels zumindest einer Leiterbahn auf der ersten Oberfläche elektrisch kontaktiert, wobei zumindest ein Durchkontaktierungspunkt durch das Substrat das Sensorelement auf der zweiten Oberfläche mit der Leiterbahn auf der ersten Oberfläche elektrisch verbindet.

Die elektrische Kontaktierung der Sensorelemente kann so erfolgen, dass auf der gleichen Seite des Substrats, auf der auch die Sensorelemente angeordnet sind, auch die jeweiligen Leiterbahnen zur Kontaktierung der Sensorelemente angeordnet sind. Alternativ oder zusätzlich hierzu können Leiterbahnen auch auf der gegenüberliegenden ersten Oberfläche des Substrats angeordnet sein und mittels Durchkontaktierungspunkte die Kontakte der Sensorelemente auf der zweiten Oberfläche elektrisch kontaktieren. Der Begriff "Durchkontaktierungspunkt" kann in diesem Zusammenhang als ein leitfähiger Bereich verstanden werden, der sich durch das Material des ansonsten nicht leitfähigen Substrats von der ersten Oberfläche des Substrats bis hin zu der zweiten Oberfläche des Substrats erstreckt und eine elektrische Verbindung zwischen einer Leiterbahn auf der ersten Oberfläche mit einer Leiterbahn auf der zweiten Oberfläche herstellt.

Vorteilhaft können durch eine zumindest teilweise Anordnung der Leiterbahnen auf der ersten Oberfläche des Substrats, die Sensorelemente platzsparend auf dem Substrat angeordnet werden. Durch eine derartige Anordnung kann die entstehende Sensoreinheit kompakt ausgebildet werden.

In einem weiteren Beispiel sind die Sensorelemente zumindest bereichsweise aus einer gemeinsamen zentralen Leiterbahn ausgebildet, die auf der ersten Oberfläche und/oder auf der zweiten Oberfläche angeordnet ist.

Beispielsweise kann der Massekontakt als gemeinsame Leiterbahn ausgebildet werden, um hierdurch einen kompakten und materialsparenden Aufbau zu erreichen.

In noch einem Beispiel umfassen die Sensorelemente Widerstandselemente, insbesondere mäanderförmige Widerstandslinien aus einem leitfähigen Material, insbesondere Platin.

Vorteilhaft kann durch ein Anordnen von mäanderförmigen Widerstandslinien auf dem Substrat sehr dünne Sensorelemente gebildet werden, die zu einem kompakten und materialsparenden Aufbau beitragen.

In einem Beispiel sind die Widerstandselemente auf die zweite Oberfläche aufgedruckt, und/oder aufgedampft.

Besonders vorteilhaft können durch einen direkten Druck der Widerstandselemente auf das Substrat, auch kleine Stückzahlen von entsprechend hergestellten Sensoreinheiten kostengünstig, ohne aufwendige Umrüstkosten des Produktionsmittels, hergestellt werden. Auch kann, wenn die Widerstandselemente aufgedruckt werden sollen, der gesamte Designprozess der Sensoreinheit digital erfolgen, wodurch die Zeiten von dem Entwurf bis zu einem Prototyp deutlich reduziert werden können.

In einem weiteren Beispiel umfassen die Sensorelemente Flip-Chips. Temperatursensoren, die als Flip-Chips ausgebildet sind, sind zum Beispiel in der DE102011103828A1 beschrieben. Flip-Chips bilden eine an Kontaktfeldern befestigte Brücke zwischen den Leiterbahnen und ermöglichen eine einfache Bestückung eines Sensorfelds mit zum Beispiel Temperatursensoren.

Die Leiterbahnen eines Sensorfelds können leitfähige Materialien umfassen, beispielsweise Metalle, leitfähige Metalloxide, umfassend leitfähige Partikel, gefüllten Polymeren oder intrinsisch leitfähige Polymere.

In einem Beispiel überkreuzen sich zumindest zwei Leiterbahnen zumindest bereichsweise, wobei zumindest eine Isolationsschicht in einem Bereich, in dem sich die beiden Leiterbahnen überkreuzen, zwischen den beiden Leiterbahnen angeordnet ist.

Die Isolationsschicht kann beispielsweise elektrisch isolierende Materialien umfassen, beispielsweise isolierende Metalloxide oder Polymere, insbesondere Polyimid, um Kurzschlüsse zu vermeiden.

In noch einem weiteren Beispiel weisen die Leiterbahnen jeweils zumindest ein Anschlussmittel, insbesondere zumindest ein Anschlusspad, umfassend ein Silber- und/oder Kupfermaterial zur Kontaktierung der Sensorelemente auf.

Vorteilhaft kann auf die Anschlusspads ein Verbindungsmittel, beispielsweise eine Kupferader, aufgelötet werden, um die Sensoreinheit mit einem Auswertemittel, beispielsweise mit einem Controller, zu verbinden.

In einem weiteren Beispiel umfasst das Substrat eine flexible Folie, insbesondere eine Polyimidfolie.

Vorteilhaft dämpft eine flexible Folie Vibrationen des elektronischen Aufbaus ab und verhindert Risse in den metallischen Zuleitungen und Verbindungsbrüche an den Kontaktstellen. Weiter vorteilhaft ist die Sensoreinheit durch die flexible Folie verformbar und lässt sich so der Oberfläche der Sensoreinheit anpassen.

In einem Beispiel umfasst das Adhäsionsmittel zumindest einen Klebefilm.

Vorteilhaft kann mittels des Klebefilms die Sensoreinheit einfach und kostengünstig an einer Oberfläche des Messkörpers befestigt werden. Der Klebefilm kann sich entweder über die gesamte erste und/oder zweite Oberfläche erstrecken, oder sich nur über einen Teilbereich der ersten und/oder zweiten Oberfläche erstrecken.

In einem weiteren Beispiel sind Temperatursensoren, die als Flip-Chips ausgebildet sind auf der zweiten Oberfläche des Substrats befestigt. Die dem Substrat abgewandten Seiten des Flip-Chips sind direkt mit dem Messkörper über einen Adhäsionsfilm verbunden.

Der Klebefilm kann ein selbstklebendes Material aufweisen, beispielweise Polymere aufweisen, wie Polyacrylaten, Polyamiden, Polyurethanen, Siliconen oder Epoxiden. Es können auch beidseitig klebende Klebefilme, insbesondere hochtemperaturbeständige Klebefilme auf Basis von Polyimidbändern zur Fixierung der Sensoreinheit am Messkörper verwendet werden.

Die Erfindung schlägt auch eine Verwendung einer erfindungsgemäßen Sensoreinheit zum Erfassen eines räumlichen Temperaturprofils an einem Messkörper, insbesondere an unterschiedlichen Zellen einer Batterie oder einer Brennstoffzelle vor.

Auch wird mit der Erfindung eine galvanische Zelle, insbesondere eine Batteriezelle oder eine Brennstoffzelle, vorgeschlagen mit zumindest einer an der galvanischen Zelle angeordneten erfindungsgemäßen Sensoreinheit.

Weiterhin wird mit der Erfindung ein Verfahren zur Herstellung einer Sensoreinheit zur Erfassung eines räumlichen Temperaturprofils vorgeschlagen, aufweisend die Schritte: Bereitstellen zumindest eines Substrats mit einer ersten Oberfläche und einer der ersten Oberfläche zumindest bereichsweise gegenüberliegenden zweiten Oberfläche, wobei das Substrat zumindest bereichsweise flexibel ausgebildet ist;
Anordnen zumindest eines Adhäsionsmittels, zumindest bereichsweise, auf der ersten und/oder auf der zweiten Oberfläche des Substrats, zum Anbringen der Sensoreinheit an zumindest einem Messkörper; und
Anordnen zumindest eines Sensorfelds auf der zweiten Oberfläche des Substrats.

In einem Beispiel weist das Anordnen zumindest eines Sensorfelds auf:
Anordnen des Sensorfelds mittels Siebdruck, Gravurdruck, Tampondruck und/oder mittels Inkjetdruck auf Basis einer Tinte umfassend Metallpartikel aus Gold, Silber, Platin, und/oder eine Silber-Palladium Legierung, und/oder
Anordnen des Sensorfelds mittels Aufdampfen einer Metallschicht auf die zweite Oberfläche und/oder Laser-Ablation der Metallschicht, und/oder
Anordnen des Sensorfelds mittels eines Aerosol-Depositionsverfahrens durch Abscheidung von Aerosolen umfassend Metalle, insbesondere Edelmetalle.

Beispielsweise kann für den Druck des Sensorfelds mittels Inkjet eine Inkjettinte auf Basis von Metallpartikeln, insbesondere Nanometallpartikeln verwendet werden. Die Herstellung von Goldnanopartikeln ist beispielsweise aus der DE 10 2013 016 280 A1 bekannt und ist besonders geeignet um leitfähige oxidationsresistente Strukturen zu erzeugen.

Innerhalb eines Sensorfelds können die das Sensorfeld umfassenden Sensorelemente, elektrischen Leitungen und Isolationsschichten aus unterschiedlichen Materialien umfassen. Beispielsweise können die Sensorelemente Edelmetalle umfassen, die elektrischen Leitungen können Kupfer oder Silber umfassen, und die Isolationsschichten können Polyimid umfassen.

In einem weiteren Beispiel weist das Anordnen zumindest eines Sensorfelds auf:
Anordnen zumindest eine Leiterbahn, insbesondere einer Vielzahl von Leiterbahnen, zur elektrischen Kontaktierung von zumindest einem von zumindest zwei Sensorelementen, die von dem Sensorfeld umfasst sind, und/oder
Anordnen zumindest eines Anschlussmittels, insbesondere zumindest eines Anschlusspads an der Leiterbahn.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1: eine schematische Ansicht einer zweiten Oberfläche einer Sensoreinheit gemäß einer Ausführungsform der Erfindung;
- Figur 2: ein schematisches Anschlussschema eines Sensorfelds gemäß einer Ausführungsform der Erfindung;
- Figuren 3a, 3b: schematische Ansichten einer zweiten und einer ersten Oberfläche einer Sensoreinheit gemäß einer Ausführungsform der Erfindung;
- Figur 4: eine schematische Aufsicht eines Messkörpers mit einer daran angeordneten Sensoreinheit gemäß einer Ausführungsform der Erfindung;
- Figur 5: eine schematische Seitenansicht eines Bereiches des Messkörpers mit einer daran angeordneten Sensoreinheit gemäß der in Figur 4 gezeigten Ausführungsform; und
- Figur 6: ein Verfahren zum Herstellen einer Sensoreinheit gemäß einer Ausführungsform der Erfindung.

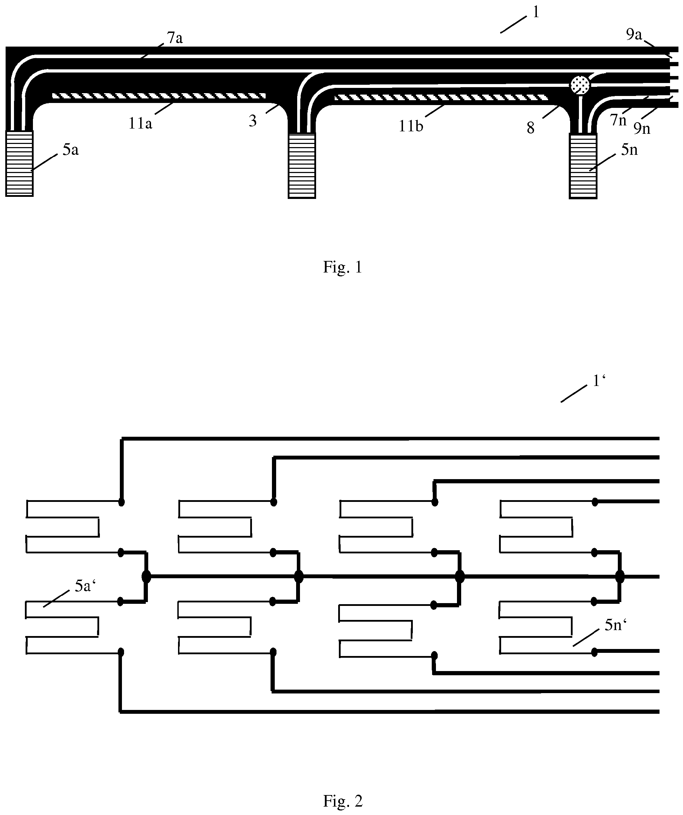

Figur 1 zeigt eine schematische Ansicht einer zweiten Oberfläche einer Sensoreinheit 1 gemäß einer Ausführungsform der Erfindung.

In der gezeigten Ausführungsform sind auf der gezeigten zweiten Oberfläche des Substrats 3 drei Sensorelemente 5a - 5n in einem Sensorfeld angeordnet, um drei Temperaturwerte an drei unterschiedlichen Positionen an einem Messkörper (nicht gezeigt) zu ermitteln. In weiteren Ausführungsformen kann das Sensorfeld auch nur zwei, oder mehr als drei Sensorelemente umfassen. Auch kann, abhängig von dem vorgesehenen Einsatzgebiet, die Geometrie des Substrats und die Anordnung der Sensorelemente auf dem Substrat anders als es in Figur 1 gezeigt wird gewählt werden. Beispielsweise kann das Substrat in weiteren Ausführungsformen auch rund oder oval ausgestaltet sein.

Weiterhin zeigt Figur 1, dass die Sensorelemente 5a - 5n auf der zweiten Oberfläche mittels Leiterbahnen 7a - 7n auf der zweiten Oberfläche elektrisch kontaktiert sind. Im Bereich überkreuzender Leiterbahnen ist zumindest eine Isolationsschicht 8 zwischen der unten liegenden und der oben liegenden Leiterbahn aufgebracht, um Kurzschlüsse zu vermeiden. In der gezeigten Ausführungsform ist die Isolationsschicht 8 im Wesentlichen rund ausgestaltet und im Wesentlichen nur in dem Bereich angeordnet, in dem sich die Leiterbahnen überkreuzen. In nicht gezeigten Ausführungsformen kann sich die Isolationsschicht auch über weitere Bereiche des Substrats erstrecken, beispielsweise kann sich die Isolationsschicht vollflächig über Leiterbahnen einer ersten Ebene erstrecken, um die Leiterbahnen der ersten Ebene von den überkreuzenden Leiterbahnen einer darauf angeordneten zweiten Ebene elektrisch zu isolieren.

An den Enden der Leiterbahnen 7a - 7n sind Anschlusspads 9a - 9n zur Kontaktierung der Sensorelemente angeordnet. Auf die Anschlusspads 9a - 9n kann ein Verbindungsmittel, beispielsweise eine Kupferader, aufgelötet werden, um die Sensoreinheit 1 mit einem Auswertemittel (nicht gezeigt) zu verbinden. In weiteren Ausführungsformen kann das Auswertemittel auch direkt auf dem Substrat angeordnet sein.

In Figur 1 werden auch zwei Klebefilme 11a, 11 b als Adhäsionsmittel gezeigt. Die beiden Klebefilme sind auf der zweiten Oberfläche angeordnet, so dass die Sensoreinheit 1 mit der zweiten Oberfläche an dem Messkörper angeordnet werden kann. In weiteren Ausführungsformen kann das Adhäsionsmittel alternativ oder zusätzlich zu der gezeigten Ausführungsform auch auf der ersten Oberfläche, die der zweiten Oberfläche gegenüberliegt, angeordnet werden. Auch würde der Fachmann wissen, dass auch lediglich ein einzelner Klebefilm oder aber mehr als zwei Klebefilme als Adhäsionsmittel verwendet werden können.

Figur 2 zeigt ein schematisches Anschlussschema eines Sensorfelds gemäß einer Ausführungsform der Erfindung.

In der gezeigten Ausführungsform umfassen die Sensorelemente 5a' - 5n' mäanderförmige Widerstandslinien aus einem leitfähigen Material. Für zuverlässige Messungen kann beispielsweise Platin verwendet werden, da dieses besonders wenig Alterung zeigt, und da sich damit Temperaturmessungen mit geringen Fehlergrenzen durchführen lassen.

Die Sensorelemente 5a' - 5n' haben jeweils einen gemeinsamen Masseanschluss und separate Anschlüsse, um die jeweiligen Temperaturwerte ermitteln zu können.

Vorteilhaft können durch die Verwendung von mehreren Sensorelementen in einem Sensorfeld, Temperaturwerte an unterschiedlichen Positionen eines Messkörpers erfasst werden.

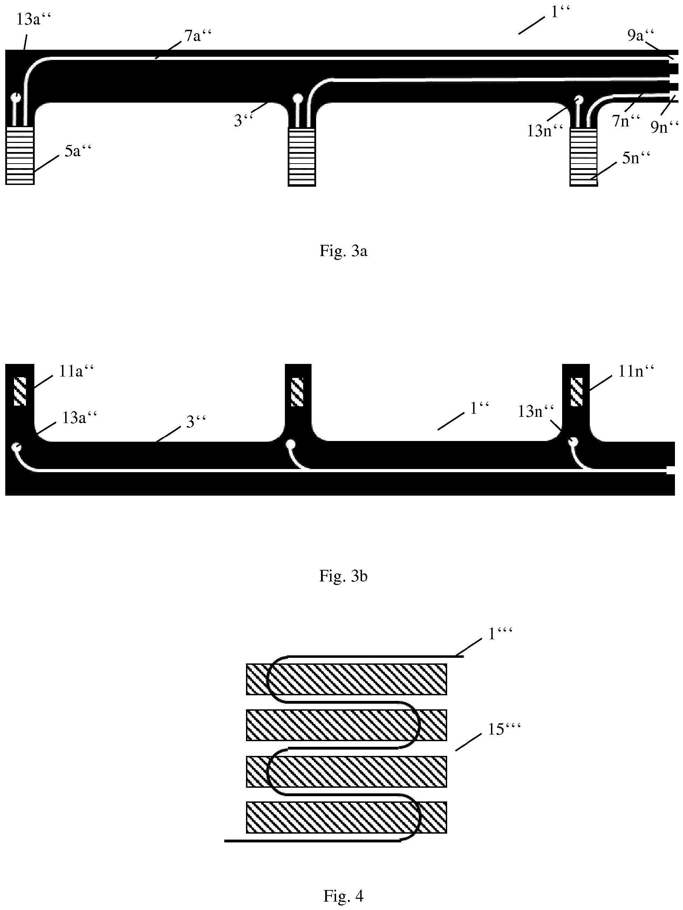

Figur 3a zeigt eine schematische Ansicht einer zweiten Oberfläche einer Sensoreinheit 1" gemäß einer weiteren Ausführungsform der Erfindung. Der Aufbau der in Figur 3a gezeigten Sensoreinheit 1" kann im Wesentlichen dem Aufbau der in Figur 1 gezeigten Sensoreinheit 1 entsprechen. Allerdings weist die in Figur 3a gezeigte Sensoreinheit 1" im Gegensatz zu der in Figur 1 gezeigten Sensoreinheit 1 Durchkontaktierungspunkte 13a" - 13n" durch das Substrat 3" auf.

Diese Durchkontaktierungspunkte 13a" - 13n" ermöglichen eine elektrische Kontaktierung der Sensorelemente 5a" - 5n" derart, dass ein Teil der jeweiligen Leiterbahnen zur Kontaktierung der Sensorelemente 5a" - 5n" auf der gleichen Seite, d.h. auf der zweiten Oberfläche, des Substrats 3" angeordnet sind, wie auch die Sensorelemente 5a" - 5n". Weitere Leiterbahnen sind auf der gegenüberliegenden ersten Oberfläche angeordnet. In Figur 3b wird gezeigt, dass der gemeinsame Masseanschluss auf der ersten Oberfläche angeordnet ist. In nicht gezeigten Ausführungsformen können aber auch alle oder lediglich ein Teil der Sensorelemente mit Leiterbahnen kontaktiert werden, die auf der ersten Oberfläche verlaufen. Die elektrische Verbindung zwischen Sensorelemente und Leiterbahnen kann entsprechen mittels Durchkontaktierungspunkte hergestellt werden.

In Figur 3b werden auch drei Klebefilme 11a" - 11 n" als Adhäsionsmittel gezeigt. Diese Klebefilme 11a" - 11 n" sind derart auf der ersten Oberfläche angeordnet, dass die Sensoreinheit 1" mit der ersten Oberfläche an einem Messkörper (nicht gezeigt) angeordnet werden kann. In alternativen Ausführungsformen können auch mehr oder weniger als drei Klebefilme zum Einsatz kommen. Beispielsweise kann ein Klebefilm vollflächig auf der ersten Oberfläche angeordnet sein.

Figur 4 zeigt eine schematische Seitenansicht eines Messkörpers 15'" mit einer daran angeordneten Sensoreinheit 1'" gemäß einer Ausführungsform der Erfindung.

Wie es beispielhaft in der Figur 4 gezeigt wird, ermöglicht die flexible Ausgestaltung des Substrats, das Erfassen von verschiedenen Temperaturwerten an verschiedenen Positionen an dem Messkörper 15"'. Der in Figur 4 gezeigte Messkörper 15'" kann beispielsweise mehrere Schichten, beispielsweise mehrere galvanische Zellen umfassen, wobei die Sensoreinheit 1'" zwischen diesen Zellen hindurchgeführt ist.

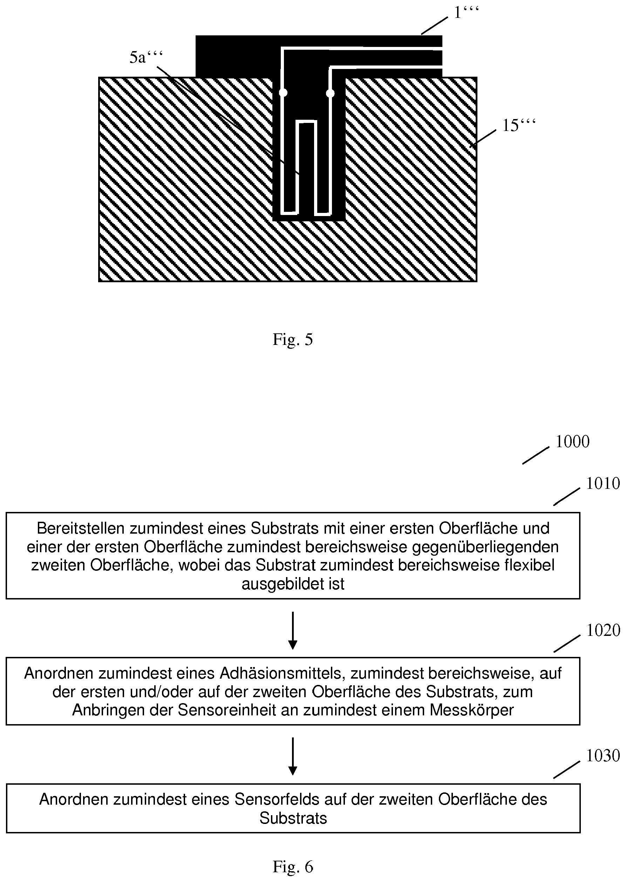

Figur 5 zeigt eine schematische Seitenansicht eines Bereiches des Messkörpers 15'" mit einer daran angeordneten Sensoreinheit 1'". Der gezeigte Ausschnitt zeigt einen Bereich des bereits in Figur 4 gezeigten Messkörpers 15"'. Wie es in Figur 5 gezeigt wird, ist zumindest ein Sensorelement 5a'" zwischen zwei Schichten des Messkörpers 15'" angeordnet.

Figur 6 zeigt ein Verfahren 1000 zum Herstellen einer Sensoreinheit gemäß einer Ausführungsform der Erfindung, mit den Schritten:
Bereitstellen 1010 zumindest eines Substrats mit einer ersten Oberfläche und einer der ersten Oberfläche zumindest bereichsweise gegenüberliegenden zweiten Oberfläche, wobei das Substrat zumindest bereichsweise flexibel ausgebildet ist;
Anordnen 1020 zumindest eines Adhäsionsmittels, zumindest bereichsweise, auf der ersten und/oder auf der zweiten Oberfläche des Substrats, zum Anbringen der Sensoreinheit an zumindest einem Messkörper; und
Anordnen 1030 zumindest eines Sensorfelds auf der zweiten Oberfläche des Substrats.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

### Bezugszeichenliste

- 1, 1', 1", 1"': Sensoreinheit
- 3, 3': Substrat
- 5a, 5a', 5a", 5a"', 5n, 5n', 5n": Sensorelement
- 7a, 7a", 7n, 7n": Leiterbahn
- 8: Isolationsschicht
- 9a, 9a', 9n, 9n': Anschlusspad
- 11 a, 11 a" 11 b, 11 n": Klebefilm
- 13a", 13n": Durchkontaktierungspunkt
- 15"': Messkörper

- 1000: Verfahren zur Herstellung einer Sensoreinheit
- 1010: Bereitstellen eines Substrats
- 1020: Anordnen eines Adhäsionsmittels
- 1030: Anordnen eines Sensorfelds

## Patentansprüche

1. Sensoreinheit zur Erfassung eines räumlichen Temperaturprofils, aufweisend:
zumindest ein Substrat (3, 3') mit einer ersten Oberfläche und einer der ersten Oberfläche zumindest bereichsweise gegenüberliegenden zweiten Oberfläche, wobei das Substrat (3, 3') zumindest bereichsweise flexibel ausgebildet ist;
zumindest ein Adhäsionsmittel, wobei das Adhäsionsmittel zumindest bereichsweise auf der ersten Oberfläche und/oder auf der zweiten Oberfläche angeordnet ist, zum Anbringen der Sensoreinheit an zumindest einem Messkörper (15"'); und
zumindest ein Sensorfeld, wobei das Sensorfeld auf der zweiten Oberfläche des Substrats (3, 3') angeordnet ist.

2. Sensoreinheit nach Anspruch 1, wobei das Sensorfeld zumindest zwei Sensorelemente (5a, 5a', 5a", 5a"', 5n, 5n', 5n") jeweils angepasst zum Erfassen einer Temperatur umfasst, die an unterschiedlichen Positionen auf der zweiten Oberfläche des Substrats (3, 3') angeordnet sind.

3. Sensoreinheit nach Anspruch 2, wobei zumindest ein Sensorelement (5a, 5a', 5a", 5a"', 5n, 5n', 5n") auf der zweiten Oberfläche mittels zumindest einer Leiterbahn (7a, 7a", 7n, 7n") auf der zweiten Oberfläche elektrisch kontaktiert ist, und/oder wobei zumindest ein Sensorelement (5a, 5a', 5a", 5a"', 5n, 5n', 5n") auf der zweiten Oberfläche mittels zumindest einer Leiterbahn (7a, 7a", 7n, 7n") auf der ersten Oberfläche elektrisch kontaktiert ist, wobei zumindest ein Durchkontaktierungspunkt durch das Substrat (3, 3') das Sensorelement (5a, 5a', 5a", 5a"', 5n, 5n', 5n") auf der zweiten Oberfläche mit der Leiterbahn (7a, 7a", 7n, 7n") auf der ersten Oberfläche elektrisch verbindet.

4. Sensoreinheit nach Anspruch 3, wobei die Sensorelemente (5a, 5a', 5a", 5a"', 5n, 5n', 5n") zumindest bereichsweise aus einer gemeinsamen zentralen Leiterbahn (7a, 7a", 7n, 7n") ausgebildet sind, die auf der ersten Oberfläche und/oder auf der zweiten Oberfläche angeordnet ist.

5. Sensoreinheit nach Anspruch 3 oder 4, wobei die Sensorelemente (5a, 5a', 5a", 5a"', 5n, 5n', 5n") Widerstandselemente, insbesondere mäanderförmige Widerstandslinien aus einem leitfähigen Material, insbesondere Platin, umfassen.

6. Sensoreinheit nach Anspruch 5, wobei die Widerstandselemente auf die zweite Oberfläche aufgedruckt, und/oder aufgedampft sind.

7. Sensoreinheit nach einem der Ansprüche 3 bis 6, wobei sich zumindest zwei Leiterbahnen (7a, 7a", 7n, 7n") zumindest bereichsweise überkreuzen, und wobei zumindest eine Isolationsschicht (8) in einem Bereich, in dem sich die beiden Leiterbahnen (7a, 7a", 7n, 7n") überkreuzen, zwischen den beiden Leiterbahnen (7a, 7a", 7n, 7n") angeordnet ist.

8. Sensoreinheit nach einem der Ansprüche 3 bis 7, wobei die Leiterbahnen (7a, 7a", 7n, 7n") jeweils zumindest ein Anschlussmittel, insbesondere zumindest ein Anschlusspad (9a, 9a', 9n, 9n'), umfassend ein Silber- und/oder Kupfermaterial zur Kontaktierung der Sensorelemente (5a, 5a', 5a", 5a"', 5n, 5n', 5n") aufweisen.

9. Sensoreinheit nach einem der vorangehenden Ansprüche, wobei das Substrat (3, 3') eine flexible Folie, insbesondere eine Polyimidfolie umfasst.

10. Sensoreinheit nach einem der vorangehenden Ansprüche, wobei das Adhäsionsmittel zumindest einen Klebefilm (11 a, 11 a" 11 b, 11 n") umfasst.

11. Verwendung einer Sensoreinheit (1, 1', 1 ", 1'") nach einem der vorangehenden Ansprüche zum Erfassen eines räumlichen Temperaturprofils an einem Messkörper (15'"), insbesondere an unterschiedlichen Zellen einer Batterie oder einer Brennstoffzelle.

12. Galvanische Zelle, insbesondere eine Batteriezelle oder eine Brennstoffzelle, mit zumindest einer an der galvanischen Zelle angeordneten Sensoreinheit (1, 1', 1", 1'") nach einem der Ansprüche 1 bis 10.

13. Verfahren zur Herstellung einer Sensoreinheit zur Erfassung eines räumlichen Temperaturprofils, aufweisend die Schritte:
Bereitstellen (1010) zumindest eines Substrats (3, 3') mit einer ersten Oberfläche und einer der ersten Oberfläche zumindest bereichsweise gegenüberliegenden zweiten Oberfläche, wobei das Substrat (3, 3') zumindest bereichsweise flexibel ausgebildet ist;
Anordnen (1020) zumindest eines Adhäsionsmittels, zumindest bereichsweise, auf der ersten und/oder auf der zweiten Oberfläche des Substrats (3, 3'), zum Anbringen der Sensoreinheit an zumindest einem Messkörper (15"'); und
Anordnen (1030) zumindest eines Sensorfelds au der zweiten Oberfläche des Substrats (3, 3').

14. Verfahren nach Anspruch 13, wobei das Anordnen (1030) zumindest eines Sensorfelds aufweist:
Anordnen des Sensorfelds mittels Siebdruck, Gravurdruck, Tampondruck und/oder mittels Inkjetdruck auf Basis einer Tinte umfassend Metallpartikel aus Gold, Silber, Platin, und/oder eine Silber-Palladium Legierung, und/oder
Anordnen des Sensorfelds mittels Aufdampfen einer Metallschicht auf die zweite Oberfläche und/oder Laser-Ablation der Metallschicht, und/oder
Anordnen des Sensorfelds mittels eines Aerosol-Depositionsverfahrens durch Abscheidung von Aerosolen umfassend Metalle, insbesondere Edelmetalle.

15. Verfahren nach Anspruch 13 oder 14, wobei das Anordnen (1030) zumindest eines Sensorfelds aufweist:
Anordnen zumindest eine Leiterbahn (7a, 7a", 7n, 7n"), insbesondere einer Vielzahl von Leiterbahnen (7a, 7a", 7n, 7n"), zur elektrischen Kontaktierung von zumindest einem von zumindest zwei Sensorelementen (5a, 5a', 5a", 5a"', 5n, 5n', 5n"), die von dem Sensorfeld umfasst sind, und/oder
Anordnen zumindest eines Anschlussmittels, insbesondere zumindest eines Anschlusspads (9a, 9a', 9n, 9n') an der Leiterbahn (7a, 7a", 7n, 7n").
